# EUROPEAN PATENT SPECIFICATION

(11) **EP 3 684 541 B1**
(45) Date of publication and mention of the grant of the patent: **04.05.2022**
(21) Application number: 18782212.7
(22) Date of filing: 11.09.2018
(51) Int. Cl.: B23K 9/18, B23K 31/02, B23K 37/02, B21D 47/04

(54) **WELDING ASSEMBLY, WELDING PLANT AND METHOD FOR WELDING**
SCHWEISSANORDNUNG, SCHWEISSANLAGE UND VERFAHREN ZUM SCHWEISSEN
ENSEMBLE DE SOUDAGE, INSTALLATION DE SOUDAGE ET PROCÉDÉ DE SOUDAGE

(30) Priority: 21.09.2017 IT 201700105530
(43) Date of publication of application: 29.07.2020
(73) Proprietor: Corimpex S.r.l., 31038 Paese (TV) (IT)
(72) Inventor: STORER, Paolo, 31038 Paese (TV) (IT)
(74) Representative: Tiburzi, Andrea
(86) International application number: PCT/IT2018/050166
(87) International publication number: WO 2019/058402

(56) References cited:
- EP-A1- 2 140 965
- US-A- 4 110 596
- US-A- 4 229 642

## Description

This invention applies to the submerged arc welding sector. More specifically, the invention relates to an automated submerged arc welding plant, aimed at the steel construction industry, and further more specifically to a welding assembly, to a plant for welding steel beams with an H profile with such welding assembly and to a method of welding steel beams with an H profile from a first flange according to the preamble of claims 1, 4 and 6 (see for example CN103567678).

In more detail, the invention relates to a plant for welding steel beams with a T or H profile.

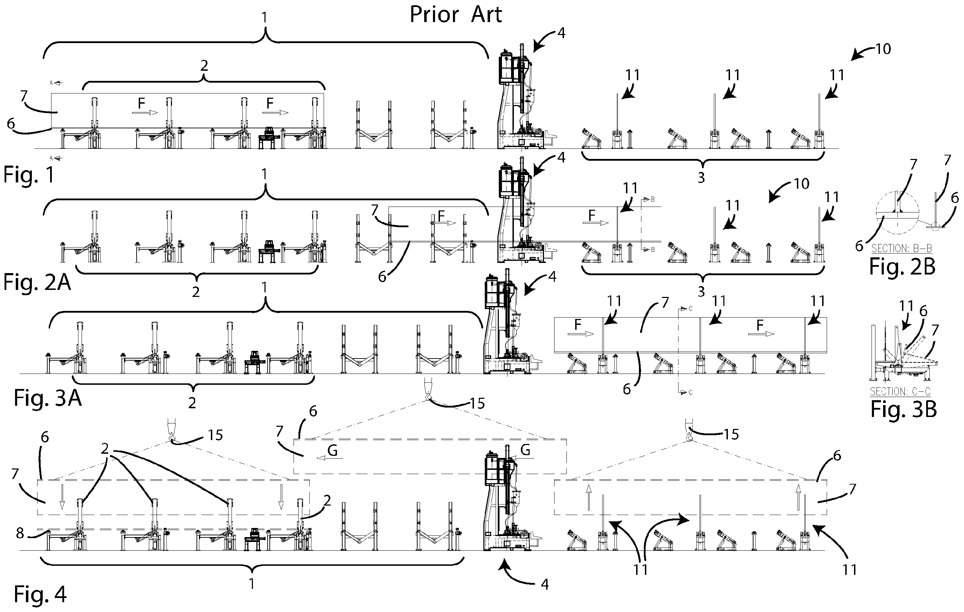

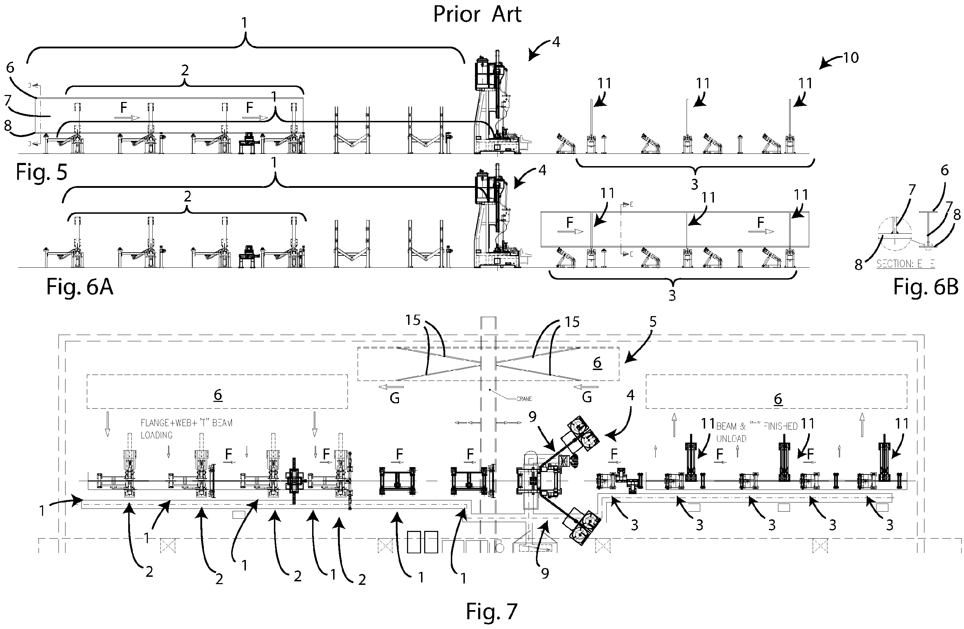

Plants for welding H beams are currently present on the market comprising several apparatuses together, making it necessary to use a gantry crane in almost all the stages of the process for assembling and handling a partially made profile (Figures 1-7 attached).

In short, the use of an area of approximately 400 m2 is needed for housing a plant 10 comprising: the infeed rollers 1 with the support cages 2, the outfeed rollers 3, the welding assembly 4 and the gantry crane 5 in front of them.

In fact, in order to make beams with an H profile, a first flange 6 is initially positioned on the infeed rollers 1, the web 7 is arranged perpendicularly and centrally to the flange 6, these two elements 6 and 7 are blocked in their reciprocal position by the support cages 2, and the two elements 6 and 7 are slid towards the welding assembly 4 (in the direction of the arrow F). As the two elements 6 and 7 slide on the infeed rollers 1 towards the welding assembly 4, the welding assembly 4 carries out, by means of the welding heads 9, the two welds at the two joining edges between the flange 6 and the web 7.

After completion of the welding of the above-mentioned elements 6 and 7, the T profile obtained in this way (comprising a single flange 6 and the web 7) is turned over, and the attachment system 15 of the gantry crane 5 then picks up the T profile and places it again on a new flange 8 on the infeed rollers 1, moving it in the direction of the arrows G, opposite to the arrows F.

At this point, the steps described above are repeated until the welding of the second flange 8 to the web 7 along the two joining edges.

However, as well as the need for a significant production space for housing the gantry crane as well as the plant, the current system has a certain degree of danger during the step for tilting the T profile, as it is complex to control.

Another risk of accidents occurs during the step for transferring the T profile by means of the gantry crane 5, from the tilting means 11 of the outfeed rollers 3 to the infeed rollers 1.

Moreover, a drawback is given by the noise exceeding 85 Decibels during the step for tilting the T profile.

A further drawback is given by the wear of the tilting levers made of steel, which require frequent maintenance.

Since the movement by means of the gantry crane requires a certain time, the productivity of the plant is adversely affected, with obvious down times. Yet another drawback is due to the fact that the control of so many apparatuses is so complex that it requires the presence on the production line of three operators.

There is therefore the need on the market for a welding plant for beams with an H profile with a high productivity, without down times and which allows the production space available to be optimised.

A welding assembly is also known from:
CN104014900, and CN104308333.

The aim of the plant and the method according to the invention is to overcome the above-mentioned drawbacks and obtain a production plant and a relative method which is efficient from the point of view of production times and the space occupied, as well as for the control of the risk of accidents during their use.

The object of the invention is therefore a welding assembly designed to be positioned in line between first rollers and second rollers of a plant for the welding of steel beams with an H profile (starting from a first flange, a web and a second flange to be welded together).

The invention provides a welding assembly as defined in claim 1, the welding assembly to rotate about itself on a support surface by 180° about a relative vertical axis (perpendicular to the support surface), in such a way as to receive the web, the first flange and/or the second flange, both when coming from the first infeed rollers and when coming from the second outfeed rollers.

Preferably, the invention can comprise chain operated tilting means, for tilting the first flange and the web by 180° on the second rollers with precision and control of the movement, without requiring the intervention of an operator.

Another advantage is given by the reduction of the noise and the risk of accidents, because the movement of the beam is controlled and accurate. Moreover, the invention can also comprise suspension means equipped with hydraulic telescopic arms, to keep suspended in position the first flange and/or the web when in movement, after tilting.

This allows, advantageously, the operations for centering and alignment of the web on the second flange to be performed in an easy and safe manner.

Another object of the invention is a plant for the welding of steel beams with an H profile (which can be made as described above) as defined in claim 4, comprising first rollers and second rollers and the above-mentioned welding assembly positioned in line between the first rollers and second rollers.

Advantageously, therefore, it is possible to eliminate the presence of the gantry crane and to move the beam simply by means of the rollers themselves; consequently with a considerable reduction in space, as well as a reduction in time.

According to the invention, the plant can comprise support cages for supporting and centring the web with respect to the first flange, each equipped with a hydraulic clamp for their actuation. In this way, the force exerted is not only greater but also uniform along the entire beam, facilitating the alignment and centring operations.

Another object of the invention is a method of welding steel beams with an H profile starting from a first flange, a web and a second flange as defined in claim 6, comprising the following steps:
- receiving the first flange on first rollers
- positioning the web perpendicularly to the first flange and centrally with respect to it (in this obtaining a beam with a T profile, given by the first flange and by the web)
- passing the T profile (where the term "T profile" means the above-mentioned beam, which has a cross section with such a profile) inside a welding assembly and simultaneously welding the first flange to the web
- resting the T profile on second rollers
- tilting the T profile by 180° with respect to a horizontal plane
- rotating the welding assembly by 180° about its vertical axis
- inserting the second flange beneath the turned T profile, positioning the web perpendicular to the second flange and centrally with respect to it (in this way, a beam is obtained with an H profile given by the first flange, the second flange and the web)
- passing the H profile inside the welding assembly rotated in this way and simultaneously welding the second flange to the web.

The method advantageously allows the production to be considerably reduced, eliminating the down time due to the transport by means of the gantry crane of the T beam in the intermediate processing step.

Further characteristics and advantages of the plant and the method, according to the invention, will more fully emerge from the description that follows, relative to a preferred embodiment thereof given by way of nonlimiting example, and from the appended drawings, in which:
- Figure 1 is a schematic front view of a production line, in a first step, according to the prior art;
- Figure 2A is a schematic front view of the production line of Figure 1, in a second step;
- Figure 2B is a cross-section of a detail of Figure 2A;
- Figure 3A is a schematic front view of the production line of Figure 1, in a third step;
- Figure 3B is a cross section of a detail of Figure 3A, with tilting means shown in the initial position with a continuous line and in intermediate positions with a dashed line;
- Figure 4 is a schematic front view of the production line of Figure 1, in a fourth step, with welding elements shown in intermediate positions with a dashed line;
- Figure 5 is a schematic front view of the production line of Figure 1, in a fifth step;
- Figure 6A is a schematic front view of the production line of Figure 1, in a sixth step;
- Figure 6B is a cross-section of a detail of Figure 6A;
- Figure 7 is a top view of the production line of Figure 1, with gantry crane and the elements to be welded shown in intermediate positions with a dashed line;
- Figure 8 is a schematic front view of a production line, in a first step, according to the invention;
- Figure 9A is a schematic front view of the production line of Figure 8, in a second step;
- Figure 9B is a cross-section of a detail of Figure 9A;
- Figure 10A is a schematic front view of the production line of Figure 8, in a third step;
- Figure 10B is a cross section of a detail of Figure 10A, with tilting means and elements to be welded shown in the final position with a continuous line and in intermediate positions with a dashed line;
- Figure 11A is a schematic front view of the production line of Figure 8, in a fourth step;
- Figure 11B is a cross section of a detail of Figure 11A, with lifting means and elements to be welded shown in the final position with a continuous line and the tilting means shown with a dashed line;
- Figure 12A is a schematic front view of the production line of Figure 8, in a fifth step;
- Figure 12B is a cross-section of a detail of Figure 12A;
- Figure 13 is a top view of the plant of Figure 8;
- Figure 14 shows a first detail of the plant of Figure 8, unloaded;
- Figure 15 shows the detail of Figure 14, with a first element loaded;
- Figure 16 shows the detail of Figure 14, with a second element loaded;
- Figure 17 shows the detail of Figure 16, with a cages closed;
- Figure 18 shows an enlargement of Figure 17;
- Figure 19 shows the enlargement of Figure 18, with hydraulic clamp actuated;
- Figure 20 shows a second detail of the production line of Figure 8, with elements to be welded entering the welding assembly;
- Figure 21 shows a third detail of the plant of Figure 8, with elements to be welded in a first position;
- Figure 22 shows the detail of Figure 21, with elements to be welded in a second position;
- Figure 23 shows the detail of Figure 21, with elements to be welded in a third position;
- Figure 24 shows the detail of Figure 21, with elements to be welded in a fourth position;
- Figure 25 shows a fourth detail of the plant of Figure 8, with welding assembly rotating;
- Figure 26 shows a fifth detail of the plant of Figure 8, with elements to be welded in the welding assembly;
- Figure 27 shows a sixth detail of the plant of Figure 8, with elements welded.

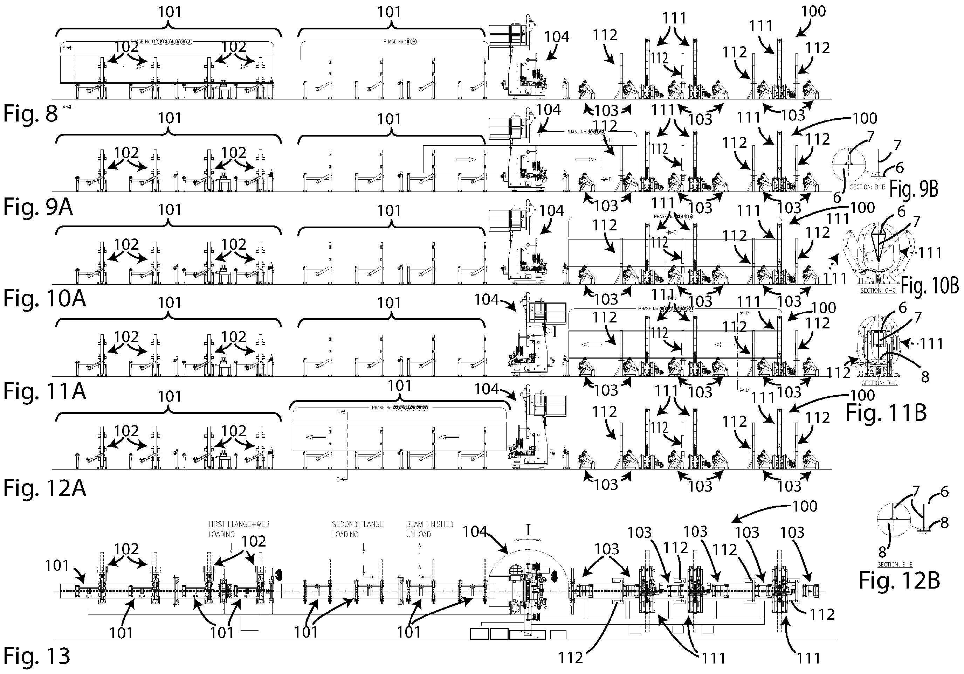

With reference to the above-mentioned Figures 8-27, the plant 100 according to the invention comprises: first rollers 101, support cages 102, second rollers 103, preferably which can be raised, and a welding assembly 104 placed in line between the first rollers 101 and the second rollers 102.

The welding assembly 104, according to the invention, is able to rotate about itself by 180° about the relative vertical axis, in the direction of the arrows I (Figures 11 and 13). Advantageously, this allows the welding assembly 104 to receive a series of elements 6, 7, 8 to be welded together, coming both from the first rollers 101 and from the second rollers 103.

In this way it is possible, advantageously, to carry out the processing both in one direction and in the opposite direction, with obvious savings in time.

Preferably, the welding assembly 104 comprises chain operated tilting means 111 for tilting the T profile by 180° on the second rollers 103.

This guarantees, advantageously, the control and the precision of the movement, reducing the risk of accidents during tilting.

Another aspect of the invention relates to the possibility of keeping the T profile tilted in this way in position, on the second flange, using the suspension means 112 equipped with hydraulic telescopic arms, in such a way as to advantageously increase the stability of the elements to be welded, and reducing to a minimum the risks of unbalancing.

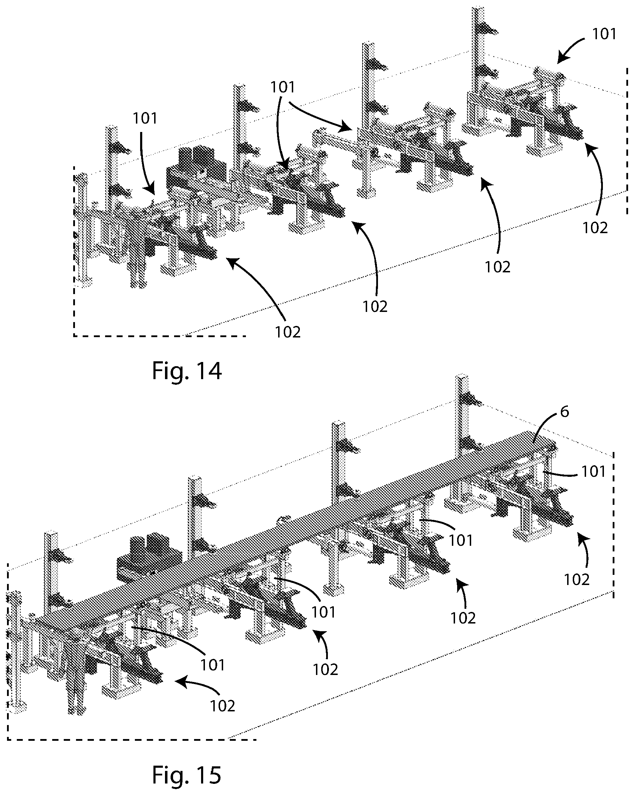

Operatively, with reference to Figures 14-27, the first rollers 101 are initially unloaded and the support cages 102, for supporting the webs 7 in position, are open (Figure 14).

The loading operations start with the loading of the first flange 6 on the first rollers 101 (Figure 15).

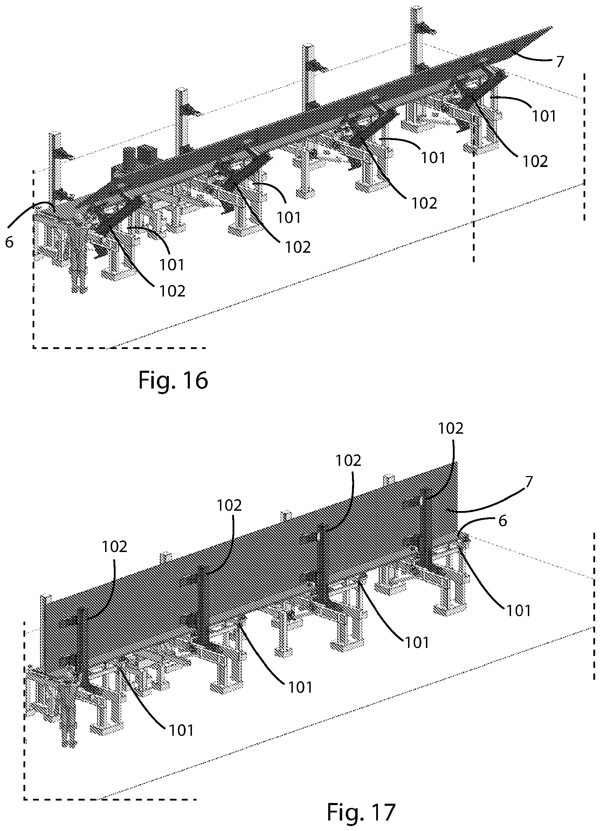

Once the first flange 6 is in position on the first rollers 101, the web 7 is positioned on the support cages 102 (Figure 16) and they close (Figure 17).

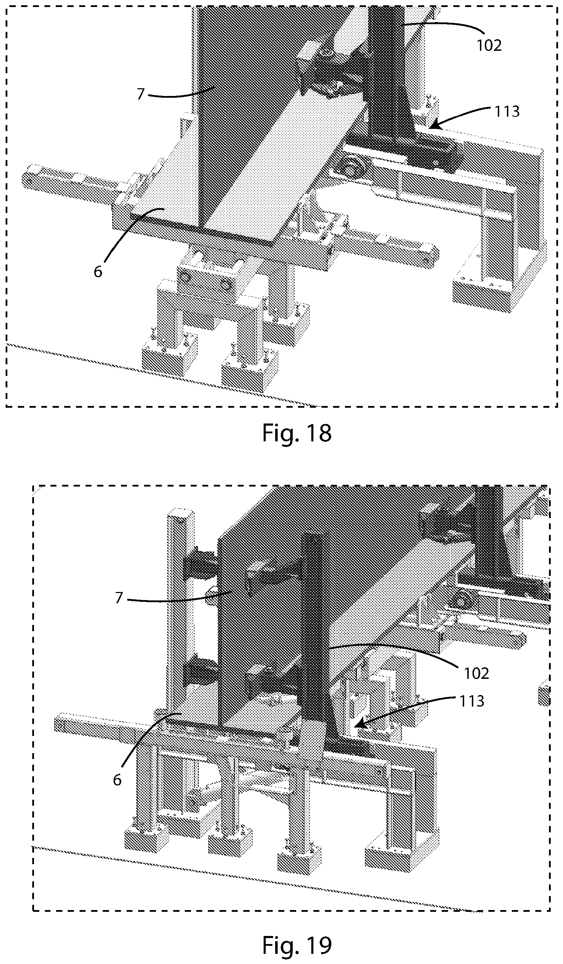

A preferred variant embodiment of the invention comprises a hydraulic clamp 113 for actuating the support cages 102, in such a way that the web 7 is aligned and centred correctly with respect to the first flange 6 (Figures 18 - 19).

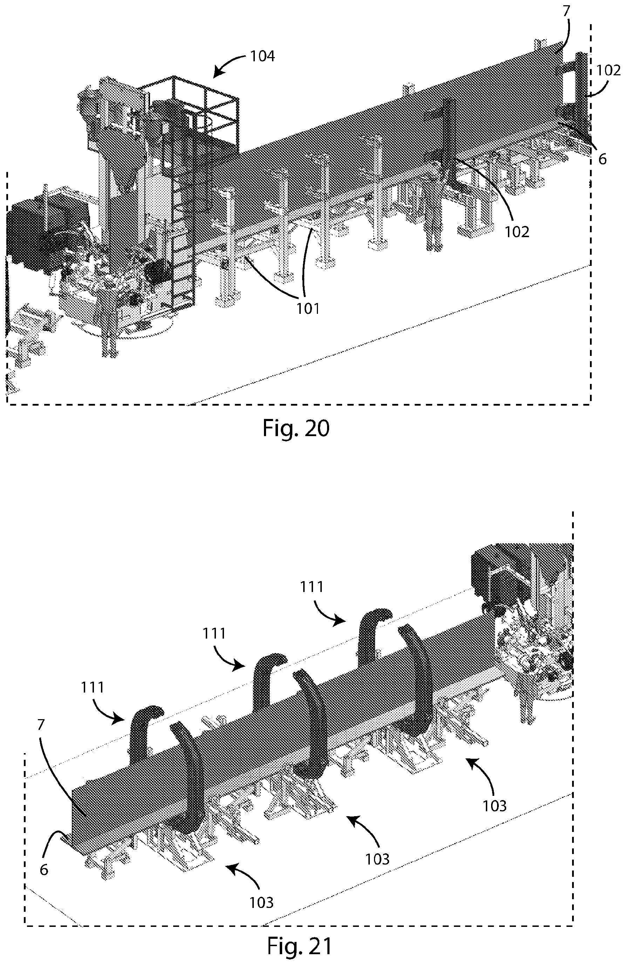

Once the web 7 has been centred with respect to the flange 6, this set of elements forms a T, which is inserted in the welding assembly 104, and the welding of the T starts (Figure 20), whilst this passes through the welding assembly and rests on the second rollers 103, raised.

After the first welding step has been completed, that is, when the T is resting completely on the second rollers 103, the latter lower downwards (Figure 21), moving the first flange 6 into contact with the chains of the 114 tilting means 111.

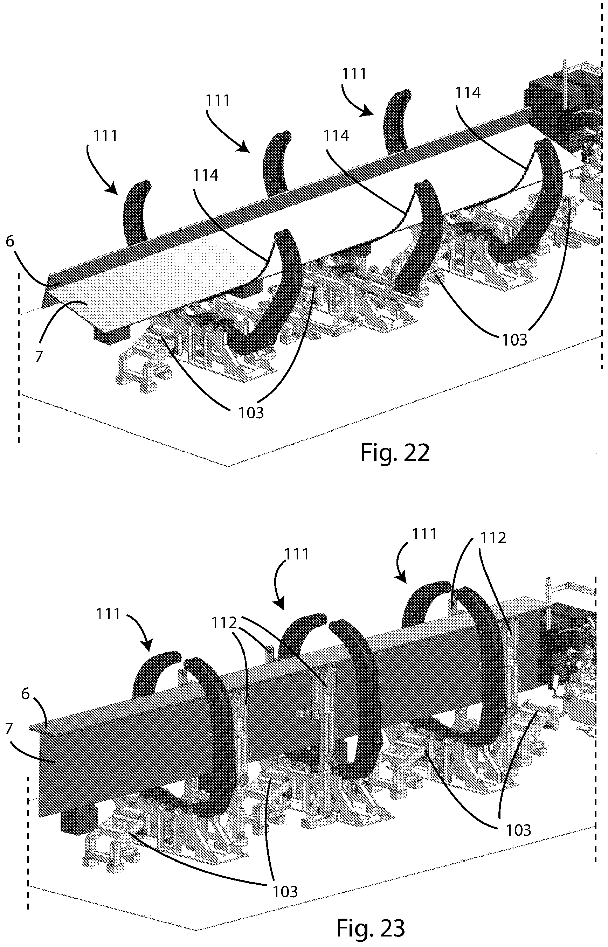

When the tilting means 111 are actuated these open whilst the chains rotate in one direction, and the T is tipped initially by 90°, moving the first flange 6 in a substantially vertical position, and the web 7 in a substantially horizontal position, with the non-welded end of the web 7 in contact with the chains 114 of the tilting means 111 (Figure 22).

When the tilting means 111 are closed, the chains 114 continue to rotate in the same direction, moving the first flange 6 upwards and the web 7 in a vertical position. The suspension means 112, preferably by means of the telescopic arms 116, therefore keep the first flange 6 perfectly horizontal and the entire T slightly suspended (Figure 23).

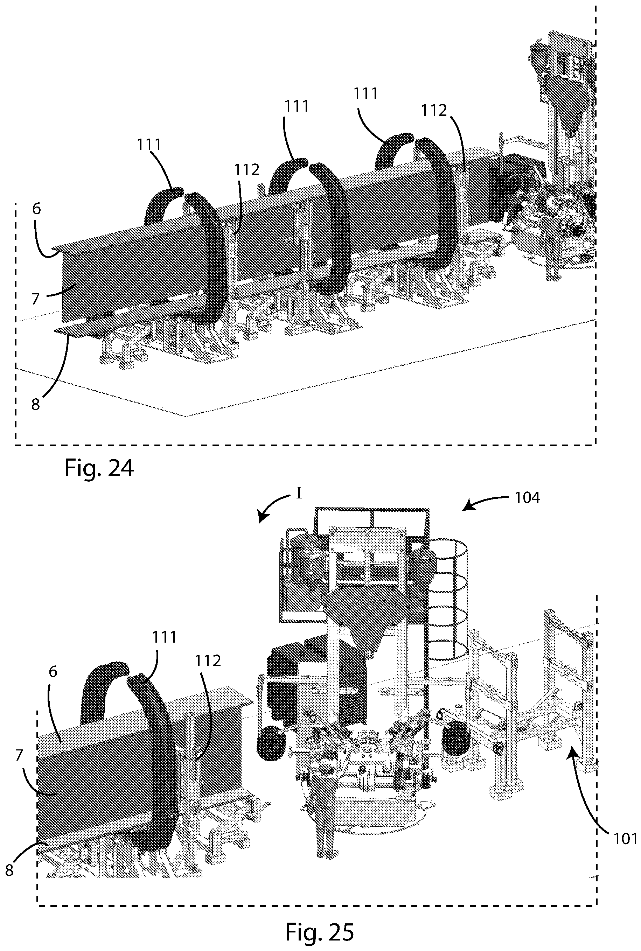

In this position it is possible to insert beneath the T the second flange 8 (Figure 24), and to centre in position the second flange 8 with respect to the web 7, in order to create an H profile.

The welding assembly 104 rotates about the relative vertical axis in the direction of the arrow I, by 180° (Figure 25), in such a way as to receive the H profile coming from the second rollers 103.

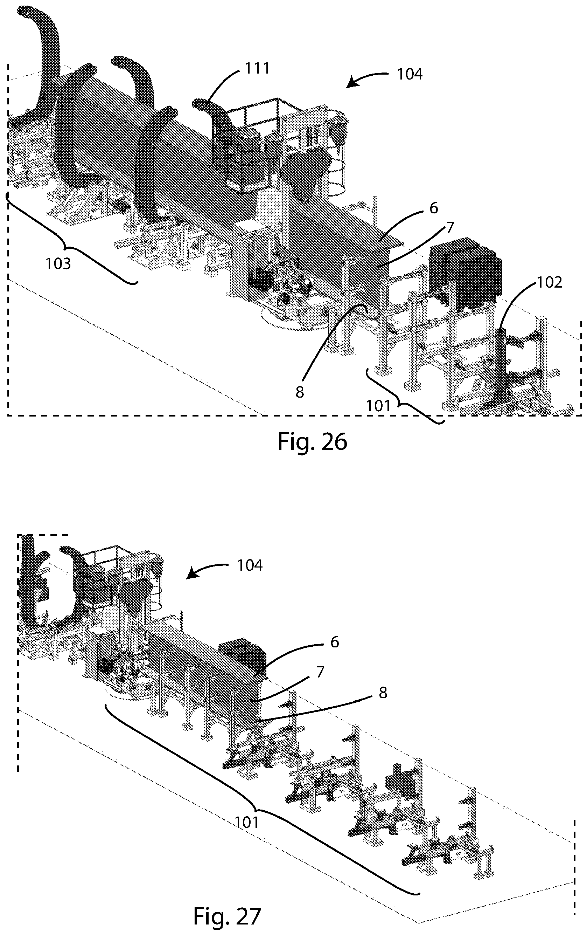

The H profile may therefore move again towards the welding assembly 104 for the welding of the second flange 8 to the web 7 (Figure 26), and then rest on the first rollers 101 (Figure 27).

The invention described can be modified and adapted in several ways without thereby departing from the scope of the present invention as defined in the appended claims.

Further, all the details can be replaced by other technically-equivalent elements.

Lastly, the components used, providing they are compatible with the specific use, as well as the dimensions, may vary according to requirements and the state of the art.

Where the characteristics and the techniques mentioned in the following claims are followed by reference signs, the reference signs have been used only with the aim of increasing the intelligibility of the claims themselves and, consequently, the reference signs do not constitute in any way a limitation to the interpretation of each element identified, purely by way of example, by the signs numbers.

## Claims

1. Welding assembly (104) suitable for being placed in line between first infeed rollers (101) and second outfeed rollers (103) of a plant (100) for welding steel beams with an H profile starting from a first flange (6), a web (7) and a second flange (8) to be welded together, the welding assembly (104) comprising a base and two welding systems located on the base and lying opposite to each other with respect to the directions of movements of the steel beams with an H profile, the welding systems being configured to complete welding,
**characterized in that**, the welding assembly (104) is suitable to rotate about itself 180°, about its vertical axis, in a way to receive the web (7) of said steel beams, the first flange (6) of said steel beams and/or the second flange (8) of said steel beams, either when coming from the first infeed rollers (101), or when coming from the second outfeed rollers (103), so that said welding assembly (104) can weld completely together the web (7) of said steel beams, the first flange (6) of said steel beams and/or the second flange (8) of said steel beams both when coming from the first infeed rollers (101) and when coming from the second outfeed rollers (103).

2. A welding assembly (104) according to claim 1, **characterized in that** it comprises chain operated tilting means (111), for turning the first flange (6) and the web (7) 180° on the second rollers (103).

3. A welding assembly (104) according to claim 1 or 2, **characterized in that** it comprises suspensions means (112) equipped with hydraulic telescopic arms, to maintain the flange (6) and/or the web (7) suspended in position.

4. Plant (100) for welding steel beams with an H profile, comprising first infeed rollers (101) and second outfeed rollers (103) over which the web (7) of said steel beams, the first flange (6) of said steel beams and/or the second flange (8) of said steel beams slide, **characterized in** comprising a welding assembly (104) according to one of claims 1-3 positioned in line between said first infeed rollers (101) and said outfeed rollers (103), the welding assembly (104) allowing to weld together a first flange of said steel beams (6), a web (7) of said steel beams, and a second flange of said steel beams (8).

5. Plant (100) according to claim 4, **characterized in** comprising support cages (102) for supporting and centering the web (7) with respect to the first flange (6), each having a hydraulic clamp (113 ) for operating said support cages (102).

6. A method for welding steel beams with an H profile from a first flange (6), a web (7) and a second flange (8), **characterized in that** it comprises the following steps:
- receiving the first flange (6) on the first rollers (101);
- positioning the web (7) perpendicular to the first flange (6) and centered with respect to it, so as to obtain a T profile comprising the first flange (6) and the web (7);
- passing the T profile inside a welding assembly (104) and simultaneously weld the first flange (6) to the web (7);
- laying the T profile on second rollers (103);
- turning the T profile 180 ° with respect to a horizontal plane;
- rotating the welding assembly (104) 180° about its vertical axis;
- inserting the second flange (8) below the turned T profile, positioning the web (7) perpendicular to the second flange (8) and centered with respect to it, so as to obtain a H profile comprising the first flange (6), the second flange (8) and the web (7);
- passing the H profile within the welding assembly (104) rotated and proceed simultaneously, welding the second flange (6) to the web (7).

## Patentansprüche

1. Schweißanordnung (104), die dazu geeignet ist, linear zwischen ersten Einlaufwalzen (101) und zweiten Auslaufwalzen (103) einer Anlage (100) zum Schweißen von Stahlträgern mit einem H-Profil ausgehend von einem ersten Flansch (6), einem Steg (7) und einem zweiten Flansch (8), die miteinander zu verschweißen sind, platziert zu sein, wobei die Schweißanordnung (104) eine Basis und zwei Schweißsysteme umfasst, die sich auf der Basis befinden und sich in Bezug auf die Bewegungsrichtungen der Stahlträger mit einem H-Profil gegenüberliegen, wobei die Schweißsysteme dazu konfiguriert sind, das Schweißen zu vervollständigen,
**dadurch gekennzeichnet, dass** die Schweißanordnung (104) dazu geeignet ist, sich um 180° um ihre vertikale Achse zu drehen, um den Steg (7) der Stahlträger, den ersten Flansch (6) der Stahlträger und/oder den zweiten Flansch (8) der Stahlträger aufzunehmen, entweder wenn sie von den ersten Einlaufwalzen (101) kommen oder wenn sie von den zweiten Auslaufwalzen (103) kommen,
sodass die Schweißanordnung (104) den Steg (7) der Stahlträger, den ersten Flansch (6) der Stahlträger und/oder den zweiten Flansch (8) der Stahlträger vollständig zusammenschweißen kann, sowohl wenn sie von den ersten Einlaufwalzen (101) kommen als auch wenn sie von den zweiten Auslaufwalzen (103) kommen.

2. Schweißanordnung (104) nach Anspruch 1, **dadurch gekennzeichnet, dass** sie ein kettenbetriebenes Kippmittel (111) zum Wenden des ersten Flansches (6) und des Stegs (7) 1800 auf den zweiten Walzen (103) umfasst.

3. Schweißanordnung (104) nach Anspruch 1 oder 2, **dadurch gekennzeichnet, dass** sie ein Aufhängemittel (112) umfasst, das mit hydraulischen Teleskoparmen ausgestattet ist, um den Flansch (6) und/oder den Steg (7) aufgehängt in Position zu halten.

4. Anlage (100) zum Schweißen von Stahlträgern mit einem H-Profil, die erste Einlaufwalzen (101) und zweite Auslaufwalzen (103) umfasst, über die der Steg (7) der Stahlträger, der erste Flansch (6) der Stahlträger und/oder der zweite Flansch (8) der Stahlträger gleiten, **dadurch gekennzeichnet, dass** sie eine Schweißanordnung (104) nach einem der Ansprüche 1 bis 3 umfasst, die linear zwischen den ersten Einlaufwalzen (101) und den Auslaufwalzen (103) positioniert ist, wobei die Schweißanordnung (104) es ermöglicht, einen ersten Flansch der Stahlträger (6), einen Steg (7) der Stahlträger und einen zweiten Flansch der Stahlträger (8) zusammenzuschweißen.

5. Anlage (100) nach Anspruch 4, **dadurch gekennzeichnet, dass** sie Stützkörbe (102) zum Stützen und Zentrieren des Stegs (7) in Bezug auf den ersten Flansch (6) umfasst, die jeweils eine hydraulische Klemme (113) zum Betätigen der Stützkörbe (102) aufweisen.

6. Verfahren zum Schweißen von Stahlträgern mit einem H-Profil aus einem ersten Flansch (6), einem Steg (7) und einem zweiten Flansch (8), **dadurch gekennzeichnet, dass** es die folgenden Schritte umfasst:
- Aufnehmen des ersten Flansches (6) auf den ersten Walzen (101);
- Positionieren des Stegs (7) senkrecht zu dem ersten Flansch (6) und zentriert in Bezug auf diesen, um ein T-Profil zu erhalten, das den ersten Flansch (6) und den Steg (7) umfasst;
- Führen des T-Profils in einer Schweißanordnung (104) und gleichzeitiges Schweißen des ersten Flansches (6) an den Steg (7);
- Legen des T-Profils auf zweite Walzen (103);
- Wenden des T-Profils um 180° in Bezug auf eine horizontale Ebene;
- Drehen der Schweißanordnung (104) um 180° um ihre vertikale Achse;
- Einsetzen des zweiten Flansches (8) unter das gewendete T-Profil, Positionieren des Stegs (7) senkrecht zu dem zweiten Flansch (8) und zentriert in Bezug auf diesen, um ein H-Profil zu erhalten, das den ersten Flansch (6), den zweiten Flansch (8) und den Steg (7) umfasst;
- Führen des H-Profils in der Schweißanordnung (104) gedreht und gleichzeitig Fortfahren mit einem Schweißen des zweiten Flansches (6) an den Steg (7).

## Revendications

1. Ensemble de soudage (104) approprié pour être placé en ligne entre des premiers rouleaux d'introduction (101) et des seconds rouleaux de sortie (103) d'une installation (100) permettant de souder des poutres en acier avec un profilé en H en partant d'une première aile (6), d'une âme (7) et d'une seconde aile (8) devant être soudées ensemble, l'ensemble de soudage (104) comprenant une base et deux système de soudage situés sur la base et se trouvant à l'opposé l'un de l'autre par rapport aux directions de mouvements des poutres en acier avec un profilé en H, les systèmes de soudage étant configurés pour terminer le soudage,
**caractérisé en ce que** l'ensemble de soudage (104) est approprié pour une rotation sur lui-même de 180°, autour de son axe vertical, de manière à recevoir l'âme (7) desdites poutres en acier, la première aile (6) desdites poutres en acier et/ou la seconde aile (8) desdites poutres en acier, soit lorsqu'elles viennent des premiers rouleaux d'introduction (101) soit lorsqu'elles viennent des seconds rouleaux de sortie (103),
de sorte que ledit ensemble de soudage (104) puisse souder complètement ensemble l'âme (7) desdites poutres en acier, la première aile (6) desdites poutres en acier et/ou la seconde aile (8) desdites poutres en acier à la fois lorsqu'elles viennent des premiers rouleaux d'introduction (101) et lorsqu'elles viennent des seconds rouleaux de sortie (103).

2. Ensemble de soudage (104) selon la revendication 1, **caractérisé en ce qu'**il comprend des moyens d'inclinaison à chaîne (111), permettant de faire tourner la première aile (6) et l'âme (7) 180° sur les seconds rouleaux (103).

3. Ensemble de soudage (104) selon la revendication 1 ou 2, **caractérisé en ce qu'**il comprend des moyens de suspension (112) équipés de bras télescopiques hydrauliques, pour maintenir l'aile (6) et/ou l'âme (7) suspendues en position.

4. Installation (100) permettant de souder des poutres en acier avec un profilé en H, comprenant des premiers rouleaux d'introduction (101) et des seconds rouleaux de sortie (103) sur lesquels l'âme (7) desdites poutres en acier, la première aile (6) desdites poutres en acier et/ou la seconde aile (8) desdites poutres en acier glissent, **caractérisée en ce qu'**elle comprend un ensemble de soudage (104) selon l'une des revendications 1-3 positionné en ligne entre lesdits premiers rouleaux d'introduction (101) et lesdits rouleaux de sortie (103), l'ensemble de soudage (104) permettant de souder ensemble une première aile desdites poutres en acier (6), une âme (7) desdites poutres en acier et une seconde aile desdites poutres en acier (8).

5. Installation (100) selon la revendication 4, **caractérisée en ce qu'**elle comprend des cages de support (102) permettant de supporter et centrer l'âme (7) par rapport à la première aile (6), chacune présentant un dispositif de serrage hydraulique (113) permettant de faire fonctionner lesdites cages de support (102).

6. Procédé de soudage de poutres en acier avec un profilé en H à partir d'une première aile (6), d'une âme (7) et d'une seconde aile (8), **caractérisé en ce qu'**il comprend les étapes suivantes :
- une réception de la première aile (6) sur les premiers rouleaux (101) ;
- un positionnement de l'âme (7) perpendiculaire à la première aile (6) et centrée par rapport à elle, de manière à obtenir un profilé en T comprenant la première aile (6) et l'âme (7) ;
- un passage du profilé en T dans un ensemble de soudage (104) et souder de manière simultanée la première aile (6) à l'âme (7) ;
- un dépôt du profilé en T sur des seconds rouleaux (103) ;
- le fait de faire tourner le profilé en T de 180° par rapport à un plan horizontal ;
- une rotation de l'ensemble de soudage (104) de 180° autour de son axe vertical ;
- une insertion de la seconde aile (8) en dessous du profilé en T tourné, un positionnement de l'âme (7) perpendiculaire à la seconde aile (8) et centrée par rapport à elle, de manière à obtenir un profilé en H comprenant la première aile (6), la seconde aile (8) et l'âme (7) ;
- un passage du profilé en H dans l'ensemble de soudage (104) après rotation et poursuivre de manière simultanée, soudant la seconde aile (6) à l'âme (7).
